# EUROPEAN PATENT APPLICATION

(11) **EP 4 471 654 A1**
(43) Date of publication of application: **04.12.2024**
(21) Application number: 24179038.5
(22) Date of filing: 30.05.2024
(51) Int. Cl.: G06F 30/392, G06F 30/398

(54) **SYSTEM AND METHOD FOR GENERATION OF A NETWORK USING PHYSICAL AWARENESS DATA FROM AN IMAGE OF A CHIP FLOORPLAN**

(30) Priority: 30.05.2023 US 202363469548 P; 30.05.2023 US 202363469826 P
(71) Applicant: Arteris, Inc., Campbell, CA 95008 (US)
(72) Inventor: PEZLEY, Christopher, Versailles (FR); VAN RUYMBEKE, Xavier, Clamart (FR); MONTEIRO, Simon, Fontenay-le-Fleury (FR); CHARIF, Amir, Paris (FR)
(74) Representative: Barker Brettell LLP

(57) **Abstract**

Floorplanning for a semiconductor chip includes loading an image of a first floorplan of the chip; converting the digital image to a grayscale image; detecting blockages in the grayscale image; and generating a second floorplan corresponding to the first floorplan. The second floorplan shows representations of the blockages and maximum available area for a network-on-chip (NoC).

## Description

### TECHNICAL FIELD

The present technology is related to electronic system design and, more specifically, to analysis and modification of floorplans for semiconductor devices that include a network-on-chip (NoC).

### BACKGROUND

Multiprocessor systems have been implemented in systems-on-chips (SoCs) that include NoCs. The SoCs include instances of intellectual properties (IPs) such as initiator IPs and target IPs that communicate via NoCs. Transactions, in the form of packets, are sent from an initiator to one or more targets using industry-standard protocols. An initiator sends a request transaction to a target, using an address to select the target. The NoC decodes the address and transports the request from the initiator to the target. The target handles the transaction and sends a response transaction, which is transported back by the NoC to the initiator.

NoCs may include elementary network functions such as network interface units, switches, adapters, and buffers. These elementary functions may use an internal NoC transport protocol to communicate with each other, typically based on the transmission of packets. Network interface units may convert the protocol used by the attached SoC unit into the transport protocol used inside the NoC. Switches may be used to route flows of traffic between source and destinations. Adapters may be used to deal with various conversions between data width, clock and power domains. Buffers may be used to insert pipelining elements to span long distances, or to store packets to deal with rate adaptation between fast senders and slow receivers or vice-versa.

As used herein, a chip floorplan refers to a schematic representation of tentative placement of a chip's major functional blocks. When a NoC is implemented on a SoC, various elements of the NoC have a location on the chip floorplan.

A NoC design may have to satisfy different performance requirements, such as connectivity and latency between source and destination, frequency of various elements, maximum area available for NoC logic and its associated routing (wiring), minimum throughput between sources and destinations, power consumption requirements, and position on the chip floorplan. It is a difficult and time-consuming task for a chip architect to design a floorplan that fulfills multiple performance requirements with a minimum amount of logic and wires. Multiple draft floorplans may be generated until the different performance requirements are satisfied. With each floorplan, the available maximum area for the NoC may change.

The task is made even more difficult and time consuming where the chip floorplan is changed. Examples of changes include modifications of the chip floorplan, addition or deletion of IP components, and modification of the expected performance. As a result, the task may be repeated frequently over the design time of the chip.

### SUMMARY

According to an embodiment herein, a computer-implemented method or floorplanning of a semiconductor chip comprises loading a digital image of a first floorplan of the chip; converting the digital image to a grayscale image; detecting blockages in the grayscale image; and generating a second floorplan corresponding to the first floorplan. The second floorplan shows representations of the blockages and maximum available area for a NoC.

According to an embodiment herein, a computer system comprises a processor and computer memory configured with a floorplanning tool for loading a digital image of a first floorplan of a semiconductor chip; converting the digital image to a grayscale image; detecting blockages in the grayscale image; and generating a second floorplan corresponding to the first floorplan. The second floorplan shows representations of the blockages and maximum available area for a network-on-chip (NoC).

According to an embodiment herein, an article comprises computer-readable memory configured with instructions that, when executed, cause a processor to load a digital image of a first floorplan of a semiconductor chip; convert the digital image to a grayscale image; detect blockages in the grayscale image; and generate a second floorplan corresponding to the first floorplan. The second floorplan shows representations of the blockages and maximum available area for a NoC.

The method, computer system and article reduce the usage of computer resources for NoC floorplanning.

### BRIEF DESCRIPTION OF THE DRAWINGS

FIG. 1 shows a computer-implemented method for chip floorplanning in accordance with various aspects and embodiments of the invention.
FIG. 2 shows a simple example of a chip floorplan and blockages detected by the method of FIG. 1 in accordance with various aspects and embodiments of the invention.
FIG. 3 shows an interactive chip floorplanning tool in accordance with various aspects and embodiments of the invention.
FIG. 4 shows a computer system in accordance with various aspects and embodiments of the invention.

### DETAILED DESCRIPTION

The following describes various examples of the present technology that illustrate various aspects and embodiments of the invention. Generally, examples can use the described aspects in any combination. All statements herein reciting principles, aspects, and embodiments as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

It is noted that, as used herein, the singular forms "a," "an" and "the" include plural referents unless the context clearly dictates otherwise. Reference throughout this specification to "one aspect," "an aspect," "certain aspects," "various aspects," or similar language means that a particular aspect, feature, structure, or characteristic described in connection with any embodiment is included in at least one embodiment of the invention.

Appearances of the phrases "in one embodiment," "in at least one embodiment," "in an embodiment," "in certain embodiments," and similar language throughout this specification may, but do not necessarily, all refer to the same embodiment or similar embodiments. Furthermore, aspects and embodiments of the invention described herein are merely exemplary, and should not be construed as limiting the scope or spirit of the invention as appreciated by those of ordinary skill in the art. The disclosed invention is effectively made or used in any embodiment that includes any novel aspect described herein. All statements herein reciting principles, aspects, and embodiments of the invention are intended to encompass both structural and functional equivalents thereof. It is intended that such equivalents include both currently known equivalents and equivalents developed in the future.

As used herein, a transaction may be a request transaction or a response transaction. Examples of request transactions include write request and read request.

As used herein, a node is defined as a distribution point or a communication endpoint that is capable of creating, receiving, and/or transmitting information over a communication path or channel. A node may refer to any one of the following: switches, splitters, mergers, buffers, and adapters. As used herein, splitters and mergers are switches, but not all switches are splitters or mergers. As used herein and in accordance with the various aspects and embodiments of the invention, the term "splitter" describes a switch that has a single ingress port and multiple egress ports. As used herein and in accordance with the various aspects and embodiments of the invention, the term "merger" describes a switch that has a single egress port and multiple ingress ports.

In accordance with the various aspects of the invention, an SoC includes multiple clock domains and multiple power domains. A clock domain is defined by all the logic fed by a given clock input. The clock input is characterized by parameters including the frequency of the clock. A power domain is defined by all the logic getting power supply from the same power source. In accordance with the various aspects of the invention, the power source is gated, thus, the power domain can be on or off or isolated from other power domains. As such, the designer provides the set of clock domain and power domain constraints as part of the initial design.

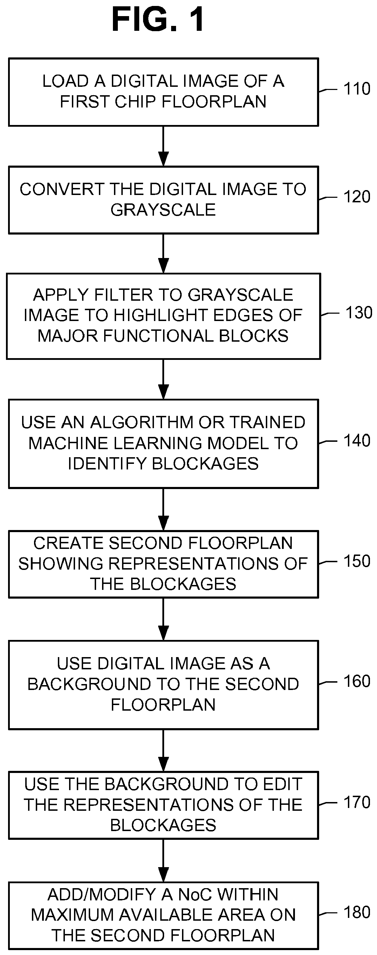

Reference is made to FIG. 1, which illustrates a computer-implemented method in accordance with the various aspects and embodiments of the invention. At block 110, a digital image of a first chip floorplan is loaded or presented to the design tool. The floorplan may be discretized into small square cells of a given size (i.e. resolution). In accordance with various aspects and embodiments of the invention, the first chip floorplan contains major functional blocks of the chip, including initiators and targets. In accordance with various aspects and embodiments of the invention, if the floorplan is an earlier draft, it may also contain elements of a NoC.

At block 120, the digital image is converted from a color image to a grayscale image so as to make blocked regions ("blockages") easier to detect. Blockages refer to areas on the chip floorplan where NoC logic and its associated wiring cannot be located.

At blocks 130 and 140, blockages in the grayscale image are detected. At block 130, a custom filter may be applied to the grayscale image to highlight edges of the major functional blocks to make shape detection easier. In addition, noisy shapes may be filtered.

At block 140, a shape detection algorithm may then be applied to identify blockages. At least some of the major functional blocks will be classified as blockages.

In accordance with various aspects and embodiments of the invention, a trained machine learning model may be used instead of a shape detection algorithm thereby allowing for a neural network or an artificial intelligence (Al) module to perform the detection and recognition. For instance, a neural network or support vector machine may be trained on images of blockages in chip floorplans to allow the tool to detect blockage areas and implement the process.

At block 150, a second floorplan and representations of the blockages are generated or created from the detected geometric shapes and displayed to a user in a graphical user interface in accordance with various aspects and embodiments of the invention. The second floorplan corresponds to the first floorplan and shows the blockages and maximum available area for the routing and placement of the NoC. Boundaries of those blockages may be represented by rectangles or other geometric shapes. The spaces between the geometric shapes represents the maximum available space for routing and placement in order to generate the NoC.

At block 160, the digital image of the chip floorplan may be included as a background for the second floorplan while the second floorplan is being edited. Whereas the representations of the blockages on the second floorplan identify maximum available area to place the NoC, the background provides additional information to the NoC designer, such as placement of specific elements such as network interface units (NIUs).

At block 170, the representations of the blockages may be edited by a user. The background may provide additional information about blockages or blockage areas that have been inaccurately identified and blockages that might have gone undetected. In accordance with various aspects and embodiments of the invention, the machine learning model receives feedback about these areas that were previously undetected to further train the machine learning model to detect these areas. The feedback can come from the designer or the feedback can be from an adversarial machine learning model providing feedback to the machine learning model to improve and train the tool using the machine learning model. Further the NoC designer may use this additional information to edit the representations of the blockages.

The tool computes an estimation of the maximum available area. This estimation may be used during NoC design to ensure that resulting NoC gates will be placeable, that is, they will fit into the area in the floorplan allotted to the NoC.

At block 180, a NoC is added to the floorplan in accordance with the aspects and embodiments of the invention. Elements of the NoC may be inserted within the maximum available space. If there were elements of a NoC from a previous draft, those elements may be moved within the maximum available area.

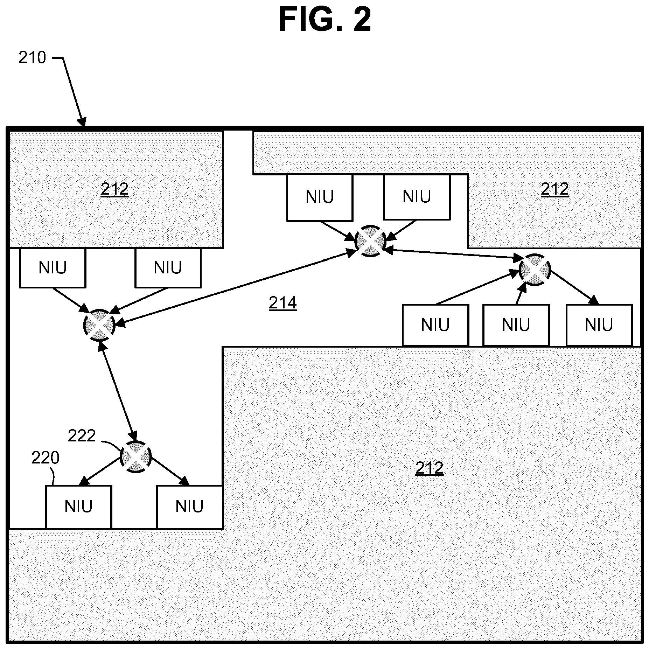

Reference is made to FIG. 2, which illustrates a simple example of a second floorplan 210 as the NoC is being added. Representations of the blockages 212 are represented by shaded areas. The maximum available area 214 is unshaded. Elements of the NoC are located within the maximum available area 214. These elements include NIUs 220 and switches 222.

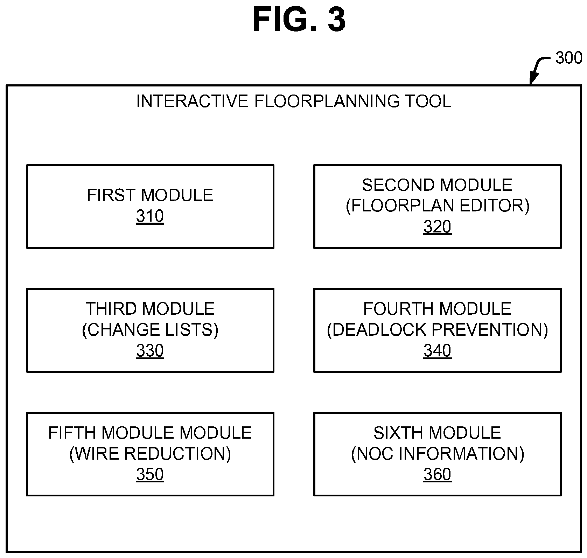

Reference is made to FIG. 3, which illustrates an interactive software tool 300 for manipulating a NoC design. A first module 310 of the tool 300 may be configured to perform some or all of the computer implemented method of FIG. 1. In accordance with various aspects and embodiments of the invention, the tool 300 includes a machine learning model as part of the first module 310.

The tool 300 may include a second module 320 that provides a full-fledged floorplan editor. In accordance with various aspects and embodiments of the invention, the module 320 interacts with the machine learning model to allow and make changes to the floorplan. The floorplan editor may be used to model the NoC internally as a set of network elements (switches, network interfaces, etc.), connections, and routes. The floorplan editor may be used to add and remove elements, update routes, etc. The floorplan editor may be used to make transformations to the network design, which can be elementary transformations (e.g. moving a network element to a different location), or complex transformations performed by automated processes (e.g. inserting multiple network elements at once and changing the routes accordingly). In accordance with various aspects and embodiments of the invention, an adversarial machine learning model is part of the module 310 and provides feedback to the machine learning model regarding floorplan edits for the purpose of further training the machine learning model.

The floorplan editor may also be used to edit the properties of network elements. It may expose to a NoC designer several displays that reflect the current state of the network, and a table that lists properties of the network elements. Additionally, the tool 300 may periodically create backups of the NoC design to a remote database via a network connection.

The tool 300 may include a third module 330 that is configured to enable a NoC designer to undo previous commands to restore a previous network state. A command is an object that describes an elementary transformation to perform on a NoC or the model of the object. For example, the tool 300 may define a command that creates a switch in a network. For each command object, the tool 300 has a command for undoing (Revert) itself. The tool 300 may generate a new command that performs the opposite action in order to Revert or undo.

The third module 330 may include a change list. A change list is an ordered list of commands (a script). A complex transformation on a model can be represented by a change list that includes many commands. A change list can be reverted, by generating a new change list that contains the reverted commands (opposite commands) in reverse order from the original change list. In accordance with various aspects and embodiments of the invention, the information generated in the change list can be provided as input or feedback to the machine learning model.

The third module 330 may further include at least one change list interpreter. A change list interpreter is an object that knows how to process each command of a change list and interpret the command into a concrete, visible effect on a specific part of the software. Each software component (graphical view, model, network database) may embed a corresponding change list interpreter. In accordance with various aspects and embodiments of the invention, the model of the network is not modified directly.

In accordance with various aspects and embodiments of the invention, each elementary transformation, transformation generated by the machine learning model, or automated bulk transformation, generates a reversible change list, and broadcasts it to all of the active change list interpreters. Each interpreter consumes the change list and interprets each command in a manner that produces a specific effect on the corresponding software component, e.g. the network database change list interpreter may generate network transactions to communicate with the database, in order to modify the fields that correspond to the current command being interpreted.

In accordance with various aspects and embodiments of the invention, the change lists may be stored in a stack. When the NoC designer (or the tool using Al based on a machine learning model) issues an "Undo" action, the change list on top of the stack is reverted and the reverted change list is broadcast and interpreted, effectively reverting the transformation performed by the original change list.

In accordance with various aspects and embodiments of the invention, the tool 300 includes a fourth module 340 for preventing deadlocks. The fourth module 340 may generate dependency graphs that includes routes and socket dependency. A flow control directed graph may be built from the routes. Each route segment is a node of the graph. For example, two nodes A and B are connected if there is a route with A then B. For instance, for a route a->b->c->d, the tool will create 3 edges or links (a->b), (b->c) and (c->d). Then the fourth module 340 may create two segments (a->b) to (b->c) and (b->c) to (c->d). In accordance with various aspects and embodiments of the invention, the tool uses Al based on a trained machine learning model to determine the route. The effectiveness of the route determine is provided as feedback to further train the Al.

An initiator (first node of a route) and the target (last node of a route) may be linked to a socket and this socket has a list of other sockets as dependencies. In accordance with various aspects and embodiments of the invention, the fourth module 340 may create a segment in the flow control graph to link a topological segment that goes from a target to all topological segments coming from an initiator linked to a socket from the dependency list. The fourth module 340 may create these dependencies only for the request network. The fourth module 340 may determine that there is a deadlock if a loop exists in the flow control graph.

In accordance with various aspects and embodiments of the invention, the tool 300 may include a fifth module 350 for transforming the network in order to reduce the number of wires used between switches, while maintaining performance requirements (e.g., minimum throughput between initiator and target). In accordance with various aspects and embodiments of the invention, any main switch or node in the NoC design may be decomposed into a cascade of splitters, with each splitter being placed on a branching point of a roadmap. Any main switch may be decomposed further into a cascade of mergers, with each merger being placed on a branching point of the merger roadmap of the attached target. A branching point of the roadmap is defined by the fact that the path is being split into two or more branches. The process of decomposing a splitter in a cascade of splitters preserves the original splitter functionality, as the number of inputs to the cascade is still one, and the number of outputs of the cascade is identical to the number of outputs of the original splitter. The process of decomposing a merger in a cascade of mergers preserves the original merger functionality, as the number of outputs of the cascade is still one, and the number of inputs to the cascade is identical to the number of inputs to the original merger. In accordance with the various aspects of the invention, the effect of the process is to obtain a set of elementary switches, which are represented by the mergers and the splitters, that are physically placed close to where the actual connections between switches need to be.

Extension of clock and power domains on the floorplan are provided and each element is tested to ensure it is located within the bounds of the specified clock and power domain. If the test fails, the element is moved until a suitable location is found where the test is passing. Once a suitable placement has been found for each element, a routing is done of each connection between elements. The routing process will find a suitable path for the set of wires making the connections between elements. After routing is done, distance-spanning pipeline elements are inserted on the links if required, using the information provided regarding the capabilities of the technology, based on how long it takes for a signal to cover a specified distance.

The wire reduction is described in greater detail in assignee's US Patent No. 11,121,933 (Application Serial No. 16/728,335) issued on Sep. 14, 2021 naming Moez Cherif, et al.*,* the entire disclosure of which is incorporated herein by reference.

The tool 300 may include a sixth module 360 for providing information about the generated NoC. The information may include a list of network elements with their configuration (e.g., data width, clock domain); position of each generated network element on the floorplan; and a set of routes through the network elements implementing the connectivity. As used herein, a route is an ordered list of network elements, one for each pair of (initiator, target) and one for each pair of (target, initiator). The route represents how traffic between the pairs will flow and through which elements.

The information may also include metrics about the generated NoC. Examples of the metrics may include histograms of wire length distribution, number of switches, and histogram of switch by size.

The sixth module 360 may provide the information in computer files in a well-defined format to capture information. One example of such a format is XML. Another example of such a format is JSON.

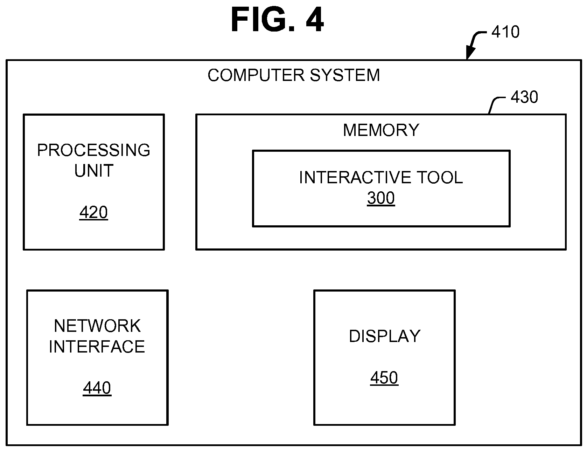

Reference is now made to FIG. 4, which illustrates elements of a computer system 410 configured with the interactive design tool 300 in accordance with various aspects and embodiments of the invention. The computer system 410 includes a processing unit 420 and computer-readable memory 430. The computer-readable memory 430 stores the tool 300 in the form of executable instructions that, when executed, cause the processing unit 420 to perform the various functions of the tool 300. The tool 300 interacts with or may include a graphical user interface for selecting the various modules 310 to 360. For instance, when the first module 310 is selected, the processing unit 420 receives a digital image of a floor chip plan from a network (via a network interface 440). In accordance with various aspects and embodiments of the invention, the machine learning model directs the processing unit 420 and it loads the digital image, converts the digital image to a grayscale image, detects blockages in the grayscale image, and generates and visually displays (on a display 450) a floorplan showing representations of the blockages. In accordance with various aspects and embodiments of the invention, the Al of the tool 300 edits or modifies the NoC design. In accordance with various aspects and embodiments of the invention, the displayed floorplan may be edited by the designer to add or modify a NoC further and the edits are provided to the machine learning model as feedback for training the Al using the machine learning model.

Certain methods according to the various aspects of the invention may be performed by instructions that are stored upon a non-transitory computer readable medium. The non-transitory computer readable medium stores code including instructions that, if executed by one or more processors, would cause a system or computer to perform steps of the method described herein. Examples of the non-transitory computer readable medium includes: a rotating magnetic disk, a rotating optical disk, a flash random access memory (RAM) chip, and other mechanically moving or solid-state storage media. Any type of computer-readable medium is appropriate for storing code comprising instructions according to various examples.

Certain examples have been described herein and it will be noted that different combinations of different components from different examples may be possible. Salient features are presented to better explain examples; however, it is clear that certain features may be added, modified and/or omitted without modifying the functional aspects of these examples as described.

Various examples are methods that use the behavior of either or a combination of machines. Method examples are complete wherever in the world most constituent steps occur. For example, and in accordance with the various aspects and embodiments of the invention, IP elements or units include: processors (e.g., CPUs or GPUs), RAM - e.g., off-chip dynamic RAM or DRAM, a network interface for wired or wireless connections such as ethernet, Wi-Fi, 3G, 4G long-term evolution (LTE), 5G, and other wireless interface standard radios. The IP may also include various I/O interface devices, as needed for different peripheral devices such as touch screen sensors, geolocation receivers, microphones, speakers, Bluetooth peripherals, and USB devices, such as keyboards and mice, among others.

Some examples are one or more non-transitory computer readable media arranged to store such instructions for methods described herein. Whatever machine holds non-transitory computer readable media comprising any of the necessary code may implement an example. Some examples may be implemented as: physical devices such as semiconductor chips; hardware description language representations of the logical or functional behavior of such devices; and one or more non-transitory computer readable media arranged to store such hardware description language representations. Descriptions herein reciting principles, aspects, and embodiments encompass both structural and functional equivalents thereof. Elements described herein as coupled have an effectual relationship realizable by a direct connection or indirectly with one or more other intervening elements.

Practitioners skilled in the art will recognize many modifications and variations. The modifications and variations include any relevant combination of the disclosed features. Descriptions herein reciting principles, aspects, and embodiments encompass both structural and functional equivalents thereof. Elements described herein as "coupled" or "communicatively coupled" have an effectual relationship realizable by a direct connection or indirect connection, which uses one or more other intervening elements. Embodiments described herein as "communicating" or "in communication with" another device, module, or elements include any form of communication or link and include an effectual relationship. For example, a communication link may be established using a wired connection, wireless protocols, near-field protocols, or RFID.

To the extent that the terms "including", "includes", "having", "has", "with", or variants thereof are used in either the detailed description and the claims, such terms are intended to be inclusive in a similar manner to the term "comprising."

The scope of the invention, therefore, is not intended to be limited to the exemplary embodiments shown and described herein. Rather, the scope and spirit of present invention is embodied by the appended claims.

## Claims

1. A computer-implemented method for floorplanning of a semiconductor chip, the method comprising:
loading a digital image of a first floorplan of the chip;
converting the digital image to a grayscale image;
detecting blockages in the grayscale image; and
generating a second floorplan corresponding to the first floorplan, the second floorplan showing representations of the blockages and maximum available area for a network-on-chip (NoC).

2. The method of claim 1, wherein detecting the blockages includes filtering the grayscale image to highlight edges of major functional blocks of the chip.

3. The method of claim 1, wherein the second floorplan shows at least some of the representations of the blockages instead of initiators and targets of the first floorplan.

4. The method of claim 3, further comprising overlaying the second floorplan over the digital image of the first floorplan to display the initiators and the targets within their representations of the blockages.

5. The method of claim 1, further comprising editing the second floorplan to generate the NoC within the maximum available area.

6. A computer system comprising a processor and computer memory configured with a chip floorplanning tool for loading a digital image of a first floorplan of a semiconductor chip; converting the digital image to a grayscale image; detecting blockages in the grayscale image; and generating a second floorplan corresponding to the first floorplan, the second floorplan showing the blockages and maximum available area for a network-on-chip (NoC).

7. The system of claim 6, wherein detecting the blockages includes filtering the grayscale image to highlight edges of major functional blocks of the chip.

8. The system of claim 6, wherein the second floorplan shows representations of the blockages instead of initiators and targets of the first floorplan.

9. The system of claim 8, wherein the chip floorplanning tool is configured to overlay the second floorplan over the digital image of the first floorplan to display the initiators and the targets within the representations of the blockages.

10. The system of claim 6, wherein the computer memory is further configured with a chip floorplanning editor for generating a NoC within the maximum available area.

11. A non-transitory computer-readable memory configured with instructions that, when executed, cause a processor to:
load a digital image of a first floorplan of a semiconductor chip;
convert the digital image to a grayscale image;
detect blockages in the grayscale image; and
generating a second floorplan corresponding to the first floorplan, the second floorplan showing representations of the blockages and maximum available area for a network-on-chip (NoC).

12. The non-transitory computer-readable memory of claim 11, wherein detecting the blockages includes filtering the grayscale image to highlight edges of major functional blocks of the chip.

13. The method of claim 2, or the system of claim 7, or the non-transitory computer-readable memory of claim 12, wherein detecting the blockages further includes using an algorithm or a trained machine learning model to classify at least some of the major functional blocks as blockages.

14. The non-transitory computer-readable memory of claim 11, wherein the second floorplan shows the representations of the blockages instead of initiators and targets of the first floorplan; and optionally
wherein the computer-readable memory is further configured with additional instructions that, when executed, cause the processor to overlay the second floorplan over the digital image of the first floorplan to display the initiators and the targets within the representations of the blockages.

15. The non-transitory computer-readable memory of claim 11, wherein the computer-readable memory is further configured with additional executable instructions that, when executed, cause the processor to provide a chip floorplanning editor for adding a NoC to the maximum available area.
